# EUROPEAN PATENT SPECIFICATION

(11) **EP 1 552 260 B1**
(45) Date of publication and mention of the grant of the patent: **21.07.2010**
(21) Application number: 03751047.6
(22) Date of filing: 10.10.2003
(51) Int. Cl.: G01L 9/00

(54) **PRESSURE SENSOR AND PRODUCTION THEREOF**
DRUCKSENSOR UND DAZUGEHÖRENDE HERSTELLUNG
CAPTEUR DE PRESSION ET FABRICATION DE CELUI-CI

(30) Priority: 11.10.2002 GB 0223704
(43) Date of publication of application: 13.07.2005
(73) Proprietor: White, William Thomas, Welwyn Garden City, Herts AL7 4PX (GB)
(72) Inventor: White, William Thomas, Welwyn Garden City, Herts AL7 4PX (GB)
(74) Representative: Jenkins, Peter David
(86) International application number: PCT/GB2003/004404
(87) International publication number: WO 2004/034006

(56) References cited:
- DE-A- 4 022 742
- US-A- 4 790 192
- US-A- 4 966 039
- US-A- 5 421 956
- US-B1- 6 318 183

## Description

The present invention relates to a pressure sensor and to a method of producing a pressure sensor.

A number of different types of pressure sensor are known in the art.

For example, US-B-6318183 discloses a multiple element sensor for sensing pressure. A substrate has a rectangular diaphragm portion on which are disposed first, second, third and fourth sensing elements. Each sensing element is a strain gauge. The diaphragm is flexible and flexes when subjected to pressure. Each of the sensing elements is adapted to output a signal proportional to the deflection. Each sensing element is disposed proximate a respective edge of the diaphragm. Each sensing element has respective output terminals and is also connected to respective power supply terminals. Each of the output terminals for the sensing elements provides a signal indicative of sensed pressure and the terminals are connected to a combining circuit. The combining circuit outputs signals indicative of pressure applied to one or more of the sensing elements. The different sensing elements have different respective pressure sensing ranges so that the pressure sensor has a wide pressure sensing range, as a result of the provision of a plurality of sensing elements on the same diaphragm, yet the sensor has good sensitivity within the range of each sensing element.

The multiple element sensor for sensing pressure disclosed in US-B-6318183 does not address the problem of providing a pressure sensor which can independently sense a number of discrete pressures from different sources. Furthermore, the sensor has a large number of electrical connections, which can reduce the reliability of the device.

US-A-2001/0049965 discloses an electronic control apparatus, contained within a housing and a cover, which comprises a printed circuit board with both electronic components and at least one pressure sensor in the form of an integrated circuit (IC). The printed circuit board contains the pressure sensor, which is disclosed as being designed as a conventional component or in the form of a surface mounted component that is soldered directly to the printed circuit board, which in turn is mounted to the cover. A "snorkel" consists of a tubular lower part and a pot-shaped upper part, the latter having an edge which is sealed to the printed circuit board by means of a sealing ring so that the upper part encloses the pressure sensor. The snorkel channels a pressure medium to be measured to the pressure sensor. As a result of the hermetic sealing of the perimeter edge of the snorkel around the pressure sensor, only the pressure sensor and localised printed circuit board within the perimeter of the snorkel are subjected to the pressure medium to be measured. The other components on the printed circuit board, as well as the housing and cover in which the printed circuit board is mounted, are not subjected to the pressure medium to be measured. In one embodiment, a pressure equalisation chamber is configured on the opposite side of the printed circuit board in relation to the snorkel, which has the same cross-sectional surface area as the upper part of the snorkel. A pressure equalisation bore, penetrating the printed circuit board at the location of the pressure sensor, enables the aeration of the pressure equalisation chamber. This ensures that the pressure is equalised on both sides of the printed circuit board, to avoid bending of the board when the pressure medium is applied. In another embodiment, a heat sink type of printed circuit board is mounted directly to the interior surface of the cover for the housing. The provides rigidity to a heat sink printed circuit board for withstanding the applied pressure medium applied by the snorkel.

The electronic control apparatus incorporating at least one pressure sensor disclosed in US-A-2001/0049965 is mechanically complicated and physically bulky. It only discloses sensors mounted onto a printed circuit board (PCB), typically composed of epoxy resin or another polymer, but the PCB may suffer from the problem of poor corrosion resistance in certain environments. There is also a risk of short circuit due to a potential exposure of electrical connections to an electrically conducting pressure medium.

The prior art is also known to provide a pressure sensor which is configured to sense a number of discrete pressures. A single manifold block is provided having a plurality of ports therein, and a respective individual sensor is threadably received in each port. Each sensor is connected by its respective electrical wire interconnects to a remote printed circuit board which provides the sensor's output. This known arrangement is physically bulky, has relatively high cost and has low reliability as a result of the large number of electrical connectors required.

WO-A-97/00433 (and its equivalent US-A-5866822) disclose a pressure sensor plate in which the sensor plate has a plurality of integral measuring diaphragms. For each diaphragm, strain gauges are applied on the respective diaphragm, and conductor tracks interconnect them to form a Wheatstone bridge, having terminal contacts. The terminal contacts associated with respective measuring diaphragms are connected to a common evaluation circuit by thick-wire bonds, specifically by aluminium wires connected to the terminal contacts by friction welding. Again, such electrical connections can reduce the reliability of the device.

US-A-5421956 discloses a method of fabricating an integrated pressure sensor. A silicon wafer has a plurality of thin diaphragms formed therein. There is formed in the silicon wafer a plurality of integrated circuit chips, each having a piezo-resistance layer and a signal processing circuit, each chip being associated with a respective diaphragm. Then the wafer is applied to a glass seat and the wafer is cut through with grooves that extend into the glass seat. The grooves define the boundaries of the chips, which are separated from each other by the grooves. Terminal plates of the sensor are connected to the chip by bonding wires. Again, bonding wires are required, which is disadvantageous and can affect reliability, even though a complicated testing protocol is employed to test that each chip is operative. Also, the use of a silicon wafer can limit the applications of the device, particularly when the pressure gauge is to be used in particular environments containing potential contaminants for the silicon wafer.

US-A-4790192 discloses silicon side by side coplanar pressure sensors. The sensors include a complicated multi-component stack of layers enclosed within a housing.

US-A-3930412 discloses electrically scanned pressure transducer configurations. Pressure sensors associated with respective pressure ports are connected together by wires to a printed circuit board. This reduces device reliability.

The present invention aims at least partially to solve the aforementioned problems in the prior art, and more particularly to provide a pressure sensor permitting compatibility between the materials of the pressure sensor and the pressure medium, low cost and suitability for high pressures.

Accordingly, in one aspect the present invention provides a pressure sensor comprising a sensor plate defining a plurality of diaphragms therein, and an electrical circuit on the sensor plate, the electrical circuit including a plurality of sensor elements, each sensor element being located above a respective diaphragm and arranged to detect a deflection of the diaphragm, and a manifold defining therein a plurality of ports for receiving pressurised fluid, the sensor plate covering an end of each of the plurality of ports, with each diaphragm being adjacent to a respective one of the ports for detecting fluid pressure changes in the respective port, and wherein the electrical circuit is a thick-film printed circuit, that has been formed *in situ* on the sensor plate, the sensor elements being formed by printing on a substrate of the electrical circuit, the electrical circuit and the sensor plate being integrated to form a monolithic plate, and the adjacent surfaces of the sensor plate and the manifold are hermetically sealed together.

In another aspect, the present invention provides a method of producing a pressure sensor, the method comprising the steps of:
(a) providing a sensor plate defining a plurality of diaphragms therein;
(b) forming an electrical circuit *in situ* on the sensor plate, whereby the electrical circuit and the sensor plate are integrated to form a monolithic plate, the electrical circuit being a thick film printed circuit including a plurality of sensor elements formed by printing on a substrate of the electrical circuit, each sensor element being located above a respective diaphragm and arranged to detect a deflection of the diaphragm;
(c) providing a manifold defining therein a plurality of ports for receiving pressurised fluid; and
(d) disposing the sensor plate on the manifold so that the sensor plate covers an end of each of the plurality of ports, with each diaphragm being adjacent to a respective one of the ports for detecting fluid pressure changes in the respective port, and the adjacent surfaces of the sensor plate and the manifold being hermetically sealed together.

Embodiments of the present invention will now be described by way of example only, with reference to the accompanying drawings, in which:
Figure 1 is a schematic perspective view of a pressure sensor for sensing a plurality of discrete pressures in accordance with a first embodiment of the present invention;
Figure 2 is a section on line A-A through the pressure sensor of Figure 1;
Figure 3 is a schematic section through the sensor plate and manifold of Figures 1 and 2;
Figure 4 is a schematic section through a modified sensor plate and manifold in accordance with a second embodiment of the present invention which is a modification of the sensor plate shown in Figure 3;
Figure 5 is a schematic section through a modified sensor plate and manifold in accordance with a third embodiment of the present invention, which is a modification of the sensor plate shown in Figure 3;
Figure 6 is a schematic section through a pressure sensor in accordance with a fourth embodiment of the present invention; and
Figure 7 is a schematic section through a sensor plate in accordance with a fifth embodiment of the present invention, which is a modification of the embodiment of Figure 6.

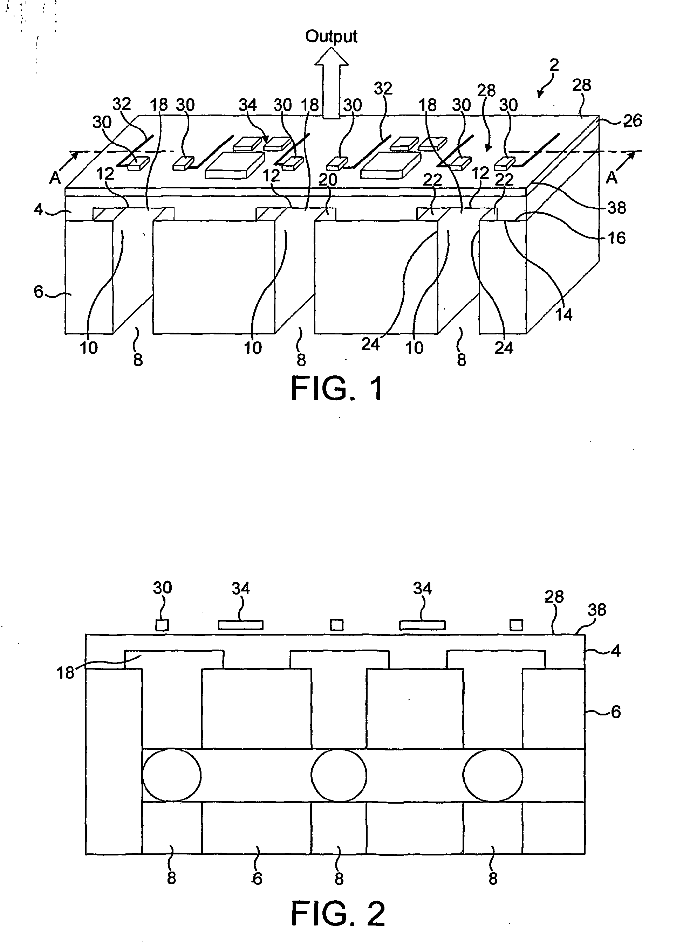

Referring to Figures 1 to 3, a pressure sensor, designated generally as 2, in accordance with a first embodiment of the present invention comprises a sensor plate 4 disposed on a manifold block 6. A plurality of pressure ports 8 are defined in the manifold block 6. Each pressure port 8 at one end terminates in an opening 10 adjacent to a respective diaphragm portion 12 of the sensor plate 4. At the other end (not shown) of each pressure port 8, the pressure port 8 is connected to a respective source (not shown) of hydraulic or pneumatic pressure which is to be measured by the pressure sensor. Thus the pressure sensor can detect fluid pressure from a liquid or gas. The adjacent surfaces 14,16 of the sensor plate 4 and the manifold block 6 are hermetically sealed together. The hermetic sealing between the manifold block 6 and the sensor plate 4 ensures that the pressure in one pressure port 8 does not inadvertently leak into an adjacent pressure port 8. A diaphragm 18 is defined by the sensor plate 4 at the respective end 10 of each pressure port 8. In the embodiment of Figures 1 to 3, the diaphragm 18 is defined by a cavity 20 formed in the sensor plate 4 above the end 10 of the respective port 8. The cavity 20 may be formed by etching, for example mechanical etching or machining, laser etching, wet chemical etching, either isotropic or anisotropic, dry reactive ion etching, ion beam etching or plasma etching. Accordingly, the diaphragm 18 is defined by a reduced thickness region of the sensor plate 4 which overlies a respective pressure port 8. The cavity 20 extends laterally with respect to edges of the respective pressure port 8 to define cutaway portions 22 of the sensor plate 4 above respective associated shoulder portions 24 of the manifold block 6. The surface area of the diaphragm 18 is may be greater than (as in Figures 1 to 3), smaller than or the same size as the cross-sectional area of the pressure port 8.

On that surface 26 of the sensor plate 4 which is remote from the surface 14 adjacent to the manifold block 6, a printed electrical circuit 28 is disposed. The printed circuit 28 has been formed on the sensor plate 4 so as to form an integral monolithic structure. The printed circuit 28 includes a plurality of sensor elements in the form of strain gauges 30, each formed in the printed circuit 28 above a respective diaphragm 18, and electrical interconnects 32, which connect the respective strain gauges 30 to respective integrated circuits 34 formed in the printed circuit 28. The integrated circuits 34 are attached as prefabricated chips on the printed circuit 28. The printed circuit 28 is formed *in situ* on the sensor plate 4 by, for example, printing, typically screen printing, various electrically conductive, insulating and resistive layers onto the surface 26 of the sensor plate 4. This, when combined with surface mounted components, forms what is known in the art as a "thick-film circuit" on the sensor plate 4, thereby to form a monolithic substrate. This combines both the diaphragms 18 and the strain gauges 30, and also the associated circuitry 32,34 for compensation networks, comprising temperature compensating and bridge balance resistors, to supply power to the strain gauges 30, and to provide signal outputs, represented schematically by the output 36 in the Figure 1. The circuitry of the thick film circuit conducts the signals from the strain sensor resistors to the output stage, which thereafter may be accessed via an analogue and/or digital communications bus. The printed circuit 28 thereby forms a functional element of the pressure sensor.

In the embodiment of Figures 1 to 3, the sensor plate 4 is electrically conductive, in particular being composed of a metal such as stainless steel, and is accordingly initially screen printed with an insulating layer 38 upon which the thick-film printed circuit 28 is subsequently fabricated as described above. The strain gauges 30 preferably comprise thick-film piezoelectric resistors which have been screen printed onto the insulating layer 38. The complementary circuitry 32,42 is also screen printed onto the insulating layer 38.

In alternative embodiments where the sensor plate 4 is electrically insulating, such as a ceramic, the additional screen printed insulating layer can be omitted, and the strain sensing resistors of the strain gauges can be printed directly onto the sensor plate.

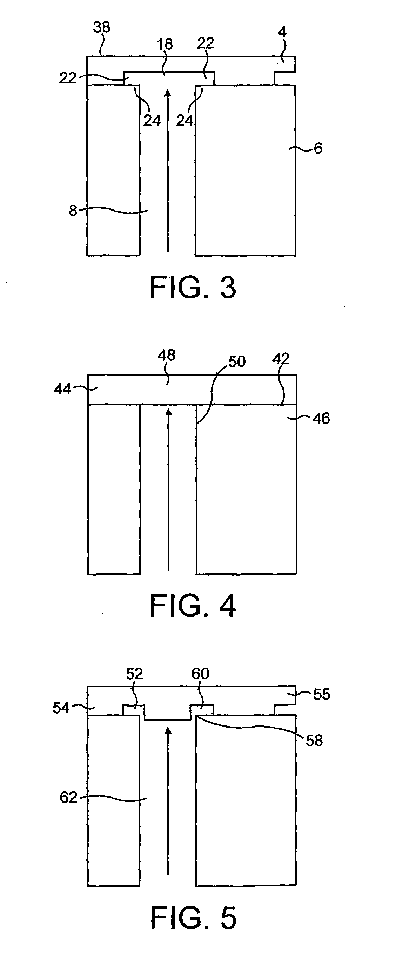

A modified assembly of the sensor plate and the manifold block is shown in Figure 4. In this embodiment, no cavity has been formed in the sensor plate 44 by etching and accordingly the surface 42 of the sensor plate 44 adjacent the manifold block 44, and defining the input side of the diaphragm 48, is planar. The surface area of each diaphragm 48 is therefore defined by the cross-sectional area of the corresponding pressure port 50.

A further modification of the sensor plate and manifold block assembly is illustrated in Figure 5. In this modification, an annular cavity 52 has been etched, as described above, in the surface 54 of the sensor plate 56 which is adjacent to the manifold block 58 so as to define an annular diaphragm 60 in the sensor plate 56 associated with the respective pressure ports 62. The annular diaphragm 60 is typically coaxial with the pressure port 62. The surface area of the diaphragm 60 is larger than the cross-sectional area of the corresponding pressure port 62.

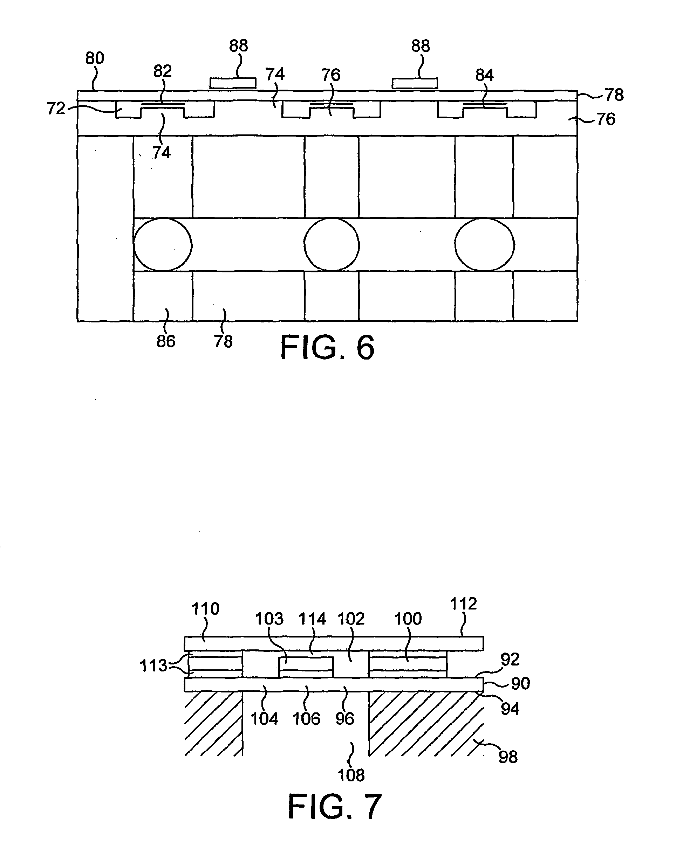

Figure 6 shows a pressure sensor in accordance with a further embodiment of the present invention. In Figure 6, any deflection of the diaphragm resulting from fluid pressure in the respective pressure port is detected using an inductive or capacitative technique rather by using a sensing element in the form of a strain gauge having a strain sensing resistor. Accordingly, in this embodiment, each diaphragm 70 is defined by forming a cavity 72, for example by etching as described above, in the surface 74 of the sensor plate 76 which is remote from the manifold block 78. An insulating substrate 78 supporting a printed circuit 80 extends over and covers each cavity 72. The printed circuit 80 may have been formed by printing so as to form a thick film circuit as described above. A sensing element 82 comprising a printed capacitor plate or a mounted or printed inductive coil is on the underside of the insulating substrate 78 in the cavity 72 thereby to define an air gap 84 between the diaphragm 70 and the sensing element 82. When the diaphragm 70 is deflected as a result of fluid pressure changes in the pressure port 86, the corresponding change in the air gap 84 between the diaphragm 70 and the sensing element 82 is detected by the sensing element 82, thereby producing a signal which can be processed by the integrated circuit 88 of the printed circuit 80 corresponding to the degree of deflection. In this embodiment, the diaphragm 70 has an inverted structure compared to the diaphragm of the embodiment of Figures 1 to 3 in the sense that a cavity 72 is formed in the surface 74 of the sensor plate 76 remote from the pressure port 86 rather than in the surface of the sensor plate communicating with the pressure port.

A yet further embodiment of a pressure sensor in accordance with the present invention is illustrated in Figure 7. In this embodiment, which is a modification of the inverted diaphragm structure of Figure 6, the sensor plate comprises a laminated structure to form an air gap rather than a single plate having an etched cavity. In this embodiment, the sensor plate 90 comprises a substrate layer 92 which has an outer surface 94 partially defining a diaphragm-forming portion 96 and partially sealed to the manifold block 98. A patterned layer 100 is laminated over the substrate layer 92. The patterned layer 100 includes an opening 102, in this embodiment an annular opening 102 and a central portion 103, which is registered with a central part 104 of a corresponding diaphragm-forming portion 96 of the substrate layer 92, thereby to define a diaphragm 106 over the associated pressure port 108. An insulating substrate 110 of a printed circuit board 112, similar to that of Figure 6, is disposed over the patterned layer 100. The adjacent surfaces of the substrate layer 92, patterned layer 100 and insulating substrate 110 are fixed together, for example by adhesive, or, when the layers are of metal, by soldering or brazing 113, except above the central portion 103 of the patterned layer 100 where an air gap 114 is provided between the central portion 103 and the insulating substrate 110. As for the embodiment of Figure 6, a capacitor plate or inductive coil (not shown) is mounted or printed onto the underside of the insulating substrate 110 to sense the thickness of the air gap 114, thereby producing an output signal indicative of the deflection of the diaphragm 106 as a result of fluid pressure in the respective pressure port 108.

In any of the embodiments of the invention, the sensor plate may be configured to have different pressure ranges for detection by the sensor elements by changing at least one of the aperture of the pressure port, the respective diaphragm area, or the thickness of the substrate and/or the diaphragm. The diaphragm may have a constant thickness across its surface area (i.e. a simple diaphragm) as shown in Figures 1 to 3 and 4 or alternatively may be annular, having a thickened central portion, as shown in Figures 5, 6 and 7. The diaphragm may be any geometric shape such as square, circular, rectangular or hexagonal. For any embodiment, the sensor plate may comprise a single plate, which may have had cavities found therein, or a laminate structure of which one or more plates may be shaped to form cavities in the laminate. The laminated structure may be suitable for any sensing technique i.e. strain gauge, inductive, or capacitive

The diaphragms and associated sensing elements may be sited over the individual pressure ports in the manifold block in a linear or matrix fashion to provide multiple-point pressure sensing using a monolithic substrate. As shown in Figure 1, if desired, a plurality of sensing elements may be associated with each diaphragm, for example two sensing elements for each pressure port, each aligned with a respective lateral edge of the respective pressure port.

The sensor elements may alternatively comprise a resonant, tunnelling current or optical detector.

The pressure sensor of the invention can be employed to sense a plurality of discrete pressures, and in particular pressures which may be encountered by corrosive, ionising or non-ionising media. The pressure sensor of the present invention has particular utility for sensing a plurality of pneumatic pressures which are present in a pneumatic brake system for a vehicle, for example a truck.

The pressure sensor of the present invention provides a pressure sensor which has low unit cost, small physical volume and high reliability. Since a plurality of pressure sensing elements are incorporated into a common monolithic plate, which integrates together both the diaphragms, the sensing elements and the electronic circuitry for generating output signals, the pressure sensor of the present invention is physically compact and can be produced at relatively low cost, for example by using known screen printing techniques for producing thick-film circuits. Furthermore, by forming a thick film printed circuit integral with the sensor plate, the number of electrical connections between the sensing elements and the output stage can be reduced as compared to known pressure sensors, for example the pressure sensor known from US-B-6318183. This reduction in the number of electrical connections can greatly increase the reliability of the pressure sensor.

In addition, as compared to the apparatus of US-A-2001/0049965, since the sensors are formed integrally in a substrate, typically ceramic or metal, rather than mounted onto a printed circuit board (PCB), typically composed of epoxy resin or another polymer, the corrosion resistance can be improved. Furthermore, with the present invention there is a reduced risk of short circuit when employed in an electrical conducting pressure medium.

## Claims

1. A pressure sensor (2) comprising a sensor plate (4) defining a plurality of diaphragms (18) therein, and an electrical circuit (28) on the sensor plate (4), the electrical circuit (28) including a plurality of sensor elements (30), each sensor element (30) being located above a respective diaphragm (18) and arranged to detect a deflection of the diaphragm (18), and a manifold (6) defining therein a plurality of ports (8) for receiving pressurised fluid, the sensor plate (4) covering an end of each of the plurality of ports (8), with each diaphragm (18) being adjacent to a respective one of the ports (8) for detecting fluid pressure changes in the respective port. (8), and wherein the electrical circuit (28) is a thick-film printed circuit, that has been formed *in situ* on the sensor plate (4), the sensor elements (30) being formed by printing on a substrate of the electrical circuit (28), the electrical circuit (28) and the sensor plate (4) being integrated to form a monolithic plate, and the adjacent surfaces of the sensor plate (4) and the manifold (6) are hermetically sealed together.

2. A pressure sensor according to claim 1 wherein the sensor plate (4) comprises a laminated structure, with at least one layer of the laminate being shaped to form at least one cavity (20) in the sensor plate (4) adjacent to a respective diaphragm (18).

3. A pressure sensor according to claim 1 or claim 2 wherein the sensor elements (30) are strain gauges which are formed on a surface of the sensor plate (4).

4. A pressure sensor according to claim 3 wherein the diaphragm (18) comprises a portion of the sensor plate (4) of constant thickness which is the same as that of adjacent portions of the sensor plate (4).

5. A pressure sensor according to claim 3 wherein the diaphragm (18) comprises a portion of the plate of constant thickness having a reduced thickness relative to adjacent portions of the sensor plate (4).

6. A pressure sensor according to claim 3 wherein the diaphragm (18) is annular having a reduced thickness portion surrounding a central thicker portion.

7. A pressure sensor according to any one of claims 1 to 6 wherein the sensor element (30) comprises at least one of a capacitive element or an inductive element connected to the electrical circuit,

8. A pressure sensor according to claim 7 wherein the diaphragm (18) is defined by a cavity (74) formed in a surface of the sensor plate and the electrical circuit (88) at least partially covers the cavity (74).

9. A pressure sensor according to claim 8 wherein the sensor element (90) is disposed in the cavity and is adapted to detect movement of the diaphragm by detection of a change in dimension of an air gap (114) defined in the cavity.

10. A method of producing a pressure sensor (2), the method comprising the steps of:
(a) providing a sensor plate (4) defining a plurality of diaphragms (18) therein;
(b) forming an electrical circuit (28) *in situ* on the sensor plate (4), whereby the electrical circuit (28) and the sensor plate (4) are integrated to form a monolithic plate, the electrical circuit (28) being a thick film printed circuit including a plurality of sensor elements (30) formed by printing on a substrate of the electrical circuit (28), each sensor element (30) being located above a respective diaphragm (18) and arranged to detect a deflection of the diaphragm (18);
(c) providing a manifold (6) defining therein a plurality of ports (8) for receiving pressurised fluid; and
(d) disposing the sensor plate (4) on the manifold (6) so that the sensor plate (4) covers an end of each of the plurality of ports (8), with each diaphragm (18) being adjacent to a respective one of the ports (8) for detecting fluid pressure change in the respective port (8), and the adjacent surfaces of the sensor plate (4) and the manifold (6) being hermetically sealed together.

## Patentansprüche

1. Drucksensor (2) umfassend eine Sensorplatte (4), die eine Vielzahl an Diaphragmen (18) darin definiert, und einen elektrischer Schaltkreis (28) auf der Sensorplatte (4), wobei der elektrische Schaltkreis (28) eine Vielzahl an Sensorelementen (30) beinhaltet, wobei jedes Sensorelement (30) über einem entsprechenden Diaphragma (18) angeordnet und arrangiert ist, um eine Auslenkung des Diaphragmas (18) zu detektieren, und einen Mehrfachblock (6), der darin eine Vielzahl an Anschlüssen (8) zum Empfangen von unter Druck gesetztem fluid definiert, wobei die Sensorplatte (4) ein Ende jedes der vielen Anschlüsse (8) abdeckt, wobei jedes Diaphragma (18) an einen entsprechenden Anschluss der Anschlüsse (8) angrenzt, um Druckänderungen des Fluids in dem entsprechenden Anschluss (8) zu detektieren, und worin der elektrische Schaltkreis (28) ein gedruckter Dickschichtschaltkreis ist, der in situ auf der Sensorplatte (4) geformt worden ist, wobei die Sensorelemente mittels Drucken auf einem Substrat des elektrischen Schaltkreises (28) geformt sind, der elektrische Schaltkreis (28) und die Sensorplatte (4) integriert sind, um eine monolithische Platte zu bilden, und die angrenzenden Oberflächen der Sensorplatte (4) und des Mehrfachblocks (6) hermetisch gegeneinander abgedichtet sind.

2. Drucksensor nach Anspruch 1, worin die Sensorplatte (4) eine laminierte Struktur umfasst, wobei mindestens eine Schicht des Laminats gestaltet ist, um mindestens eine Aussparung (20) in der Sensorplatte (4) benachbart zu einnem entsprechenden Diaphragma (18) auszuformen.

3. Drucksensor nach Anspruch 1 oder Anspruch 2, worin die Sensorelemente (30) Dehnmessstreifen sind, die auf einer Oberfläche der Sensorplatte (4) ausgebildet sind.

4. Drucksensor nach Anspruch 3, worin das Diaphragma (18) einnen Abschnitt der Sensorplatte (4) konstanter Dicke umfasst, die denen benachbarter Abschnitte der Sensorplatte (4) gleich ist.

5. Drucksensor nach Anspruch 3, worin das Diaphragma (18) einen Abschnitt der Platte konstanter Dicke umfasst, der eine reduzierte Dicke relativ zu benachbarten Abschnitten der Sensorplatte (4) hat.

6. Drucksensor nach Anspruch 3, worin das Diaphragma (18) ringförmig ist, mit einem Bereich reduzierter Dicke umgebend einen zentralen, dickeren Bereich.

7. Drucksensor nach einem der Ansprüche 1 bis 6, worin das Sensorelement (30) mindestens ein kapazitives Element oder ein induktives Element aufweist, das mit dem elektrischen Schaltkreis verbunden ist.

8. Drucksensor nach Anspruch 7, worin das Diaphragma (18) mittels einer Aussparung (74) definiert ist, die in eine Oberfläche der Sensorplatte geformt ist, und der elektrische Kreislauf (88) mindestens partiell die Aussparung (74) abdeckt.

9. Drucksensor nach Anspruch 8, worin das Sensorelement (90) in der Aussparung angeordnet und geeignet ist, um eine Bewegung des Diaphragmas zu detektieren, durch Detektion einer Änderung eines Luftschlitzes (114) in einer Dimension, der in der Aussparung definiert ist.

10. Verfahren zur Herstellung eines Drucksensors (2), wobei das Verfahren die Schritte umfasst:
(a) Bereitstellen einer Sensorplatte (4), in der eine Vielzahl an Diaphragmen (18) definiert sind;
(b) Formen eines elektrischen Kreislaufes (28) in situ auf der Sensorplatte (4), wobei der elektrische Kreislauf (28) und die Sensorplatte (4) integriert sind, um eine monolithische Platte zu bilden, der elektrische Kreislauf (28) ein gedruckter Dickschichtschaltkreis ist, der eine Vielzahl an Sensorelementen (30) beinhaltet, die auf ein Substrat des elektrischen Kreislaufs (28) gedruckt sind, wobei jedes Sensorelement (30) über einem entsprechenden Diaphragma (18) angeordnet und arrangiert ist, um ein Auslenken des Diaphragmas (18) zu detektieren;
(c) Bereitstellen eines Mehrfachblocks (6), in dem eine Vielzahl an Anschlüssen (8) zum Empfangen von unter Druck gesetztem Fluid definiert ist; und
(d) Anordnen der Sensorplatte (4) auf dem Mehrfachblock (6), sodass die Sensorplatte (4) ein Ende jedes der vielen Anschlüsse (8) abdeckt, wobei jedes Diaphragma (18) angrenzend an einem entsprechenden Anschluss der Anschlüsse (8) ist, um Druckänderungen des Fluids in dem entsprechenden Anschluss (8) zu detektieren, und die angrenzenden Oberflächen der Sensorplatte (4) und des Mehrfachblocks (6) hermetisch gegeneinander abgedichtet sind.

## Revendications

1. Capteur de pression (2) comprenant une plaque de détection (4) définissant une pluralité de diaphragmes (18) dedans, et un circuit électrique (28) sur la plaque de détection (4), le circuit électrique (28) comportant une pluralité d'éléments de détection (30), chaque élément de détection (30) étant situé au-dessus d'un diaphragme respectif (18) et agencé pour détecter une déviation du diaphragme (18), et un collecteur (6) définissant dedans une pluralité d'orifices (8) pour recevoir un fluide sous pression, la plaque de détection (4) couvrant une extrémité de chacun de la pluralité d'orifices (8), avec chaque diaphragme (18) étant adjacent à un orifice respectif des orifices (8) pour détecter des changements de pression de fluide dans l'orifice respectif (8), et où le circuit électrique (28) est un circuit imprimé à couches épaisses, qui a été formé *in situ* sur la plaque de détection (4), les éléments de détection (30) étant formés par impression sur un substrat du circuit électrique (28), le circuit électrique (28) et la plaque de détection (4) étant intégrés pour former une plaque monolithique, et les surfaces adjacentes de la plaque de détection (4) et le collecteur sont hermétiquement scellés entre eux.

2. Capteur de pression selon la revendication 1 dans lequel la plaque de détection (4) comprend une structure stratifiée, avec au moins une couche du stratifié étant conformée pour obtenir au moins une cavité (20) dans la plaque de détection (4) adjacente à un diaphragme respectif (18).

3. Capteur de pression selon la revendication 1 ou 2, dans lequel les éléments de détection (30) sont des extensomètres qui sont formés sur une surface de la plaque de détection (4).

4. Capteur de pression selon la revendication 3, dans lequel le diaphragme (18) comprend une partie de la plaque de détection (4) à épaisseur constante qui est la même que celle des parties adjacentes de la plaque de détection (4).

5. Capteur de pression selon la revendication 3, dans lequel le diaphragme (18) comprend une partie de la plaque à épaisseur constante ayant une épaisseur réduite par rapport à des parties adjacentes de la plaque de détection (4).

6. Capteur de pression selon la revendication 3, dans lequel le diaphragme (18) est annulaire avec une partie à épaisseur réduite entourant une partie centrale plus épaisse.

7. Capteur de pression selon l'une quelconque des revendications 1 à 6, dans lequel l'élément de détection (30) comprend au moins l'un d'un élément capacitif ou d'un élément inducteur relié au circuit électrique.

8. Capteur de pression selon la revendication 7, dans lequel le diaphragme (18) est défini par une cavité (74) formée dans une surface de la plaque de détection et le circuit électrique (88) couvre au moins partiellement la cavité (74).

9. Capteur de pression selon la revendication 8, dans lequel l'élément de détection (90) est disposé dans la cavité et est adapté pour détecter un mouvement du diaphragme par la détection d'un changement de dimension d'un entrefer (114) défini dans la cavité.

10. Procédé de production d'un capteur de pression (2), le procédé comprenant les étapes qui consistent à :
(a) fournir une plaque de détection (4) définissant une pluralité de diaphragmes (18) dedans ;
(b) former un circuit électrique (28) *in situ* sur la plaque de détection (4), grâce à quoi le circuit électrique (28) et la plaque de détection (4) sont intégrés pour former une plaque monolithique, le circuit électrique (28) étant un circuit imprimé à couches épaisses comportant une pluralité d'éléments de détection (30) formés par impression sur un substrat du circuit électrique (28), chaque élément de détection (30) étant situé au-dessus d'un diaphragme respectif (18) et agencé pour détecter une déviation du diaphragme (18) ;
(c) fournir un collecteur (6) définissant une pluralité d'orifices (8) dedans pour recevoir un fluide sous pression ; et
(d) disposer la plaque de détection (4) sur le collecteur (6) de sorte que la plaque de détection (4) couvre une extrémité de chacun de la pluralité d'orifices (8), avec chaque diaphragme (18) étant adjacent à un orifice respectif des orifices (8) pour détecter des changements de pression de fluide dans l'orifice respectif (8), et les surfaces adjacentes de la plaque de détection (4) et le collecteur (6) étant scellés hermétiquement entre eux.
